# EUROPEAN PATENT APPLICATION

(11) **EP 0 763 932 A2**
(43) Date of publication of application: **19.03.1997**
(21) Application number: 96114667.7
(22) Date of filing: 12.09.1996
(51) Int. Cl.: H04N 3/15

(54) **Charge transfer device**

(30) Priority: 13.09.1995 JP 234550/95
(71) Applicant: NEC CORPORATION, Tokyo (JP)
(72) Inventor: Takeuchi, Eiichi, NEC Corporation, Tokyo (JP)
(74) Representative: Glawe, Delfs, Moll & Partner

(57) **Abstract**

In a charge transfer device, charges are transferred in response to a plurality of drive clocks. Among these plural drive clocks, a final-stage drive clock applied to a final transfer gate is applied to a clock terminal for the final stage, whereas other plural drive clocks are applied to a plurality of clock terminals. The final-stage drive clock is oscillated at a predetermined frequency during a time period involving a horizontal blanking period, and these other plural drive clocks are fixed to predetermined values during the horizontal blanking period.

## Description

### BACKGROUND OF THE INVENTION

### Field of the Invention

The present invention generally relates to a charge transfer device. More specifically, the present invention is directed to a structure capable of supplying a plurality of drive pulses to a plurality of transfer gates.

### Description of the Prior Art

Very recently, rapid and advanced developments have been made in semiconductor integrated circuits. Under such circumstances, charge transfer solid-state imaging devices (for instance, two-dimensional CCD image sensors) are commercially available in home-use video camera fields. Furthermore, currently, more advanced high performance two-dimensional CCD (charge-coupled device) image sensors are developed for commercial uses.

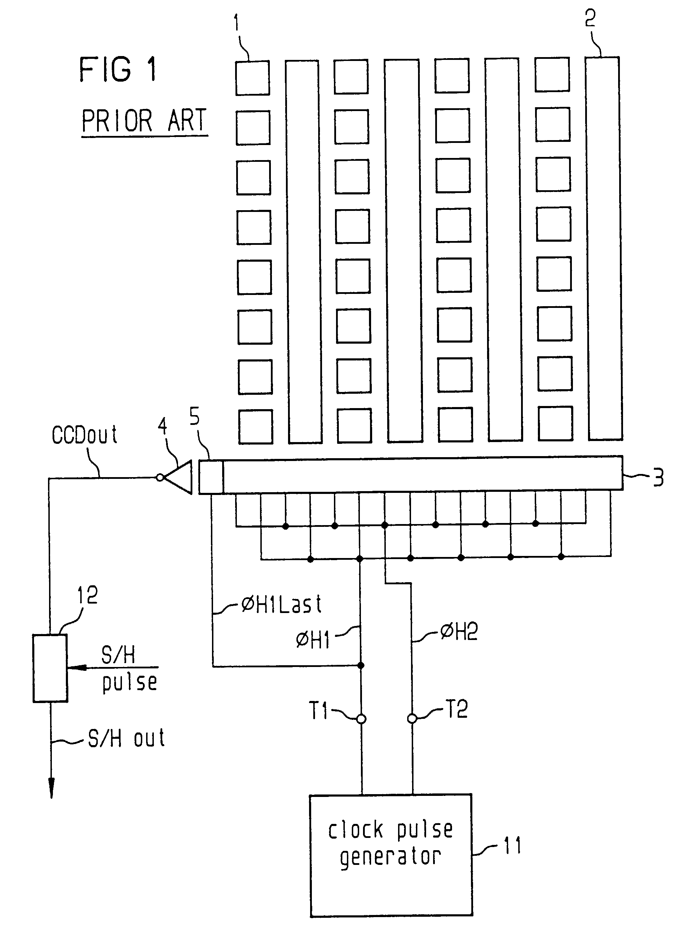

One of the typical two-dimensional CCD image sensors is described in Japanese Laid-open Patent Application No. 58-103172. That is, this patent application discloses the interline type charge transfer solid-state imaging device in which the final electrode of the horizontal register is independently and separately arranged. Referring now to Fig. 1, a description will be made of this sort of charge transfer solid-state imaging device in which a final electrode of a horizontal register is independently and separately arranged.

In this drawing, an interline transfer type charge transfer solid-state imaging device is arranged by containing a photodiode 1, a vertical register 2, a horizontal register 3, and a signal charge detecting unit 4. The photodiode 1 is arranged in a two-dimensional manner to store charges in response to incident light thereof. The vertical register 2 is provided adjacent to this photodiode 1 and holds the output from the photodiode 1. The horizontal register 3 receives the signal charge from the vertical register 2. The signal charge detecting unit 4 detects the signal charge from the horizontal register 3.

Also, this charge transfer solid-state imaging device is constituted by employing a pad T1 and a pad T2 for applying a clock pulse "φH1" and a clock pulse "φH2" used to drive the horizontal register 3, and a clock pulse generator 11 for generating these clock pulses φH1 and φH2 to be applied to the pads T1 and T2.

Furthermore, in the charge transfer solid-state imaging apparatus, more specifically, a final electrode 5 among the horizontal register 3 is independently and separately provided from the horizontal register 3. This final electrode 5 is connected to the pad T1 so as to be driven by a clock pulse "φH1Last" same as the above-described clock pulse "φH1".

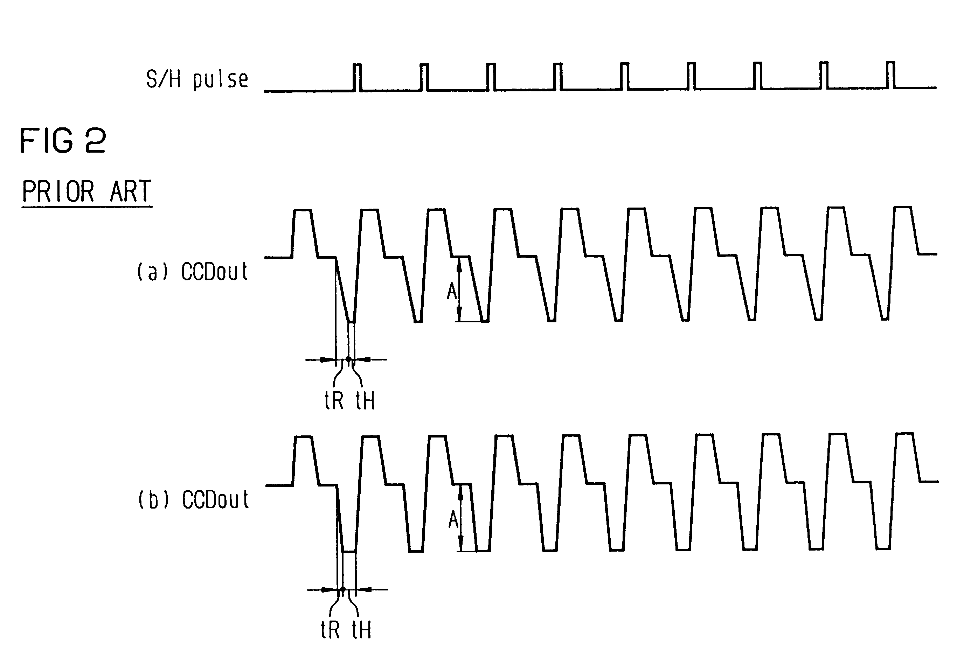

The reason why the final electrode 5 is separated from the horizontal register 3 is to achieve the following advantages. That is, the load of the clock pulse φH1 can be reduced by separating the final electrode, and the falling time of the waveform of the horizontal clock pulse "φH1Last" applied to the final electrode 5 can be shortened, so that the signal hold period of the output signal CCDout can be widened. This merit will now be explained with reference to Fig. 2.

As represented in Fig. 2, as to the output signal CCDout, while using an intermediate level after a reset portion of the signal waveform as a reference level, a signal portion defined from this reference level up to a maximum amplitude portion becomes a signal output "A". Then, this signal output "A" is detected at rising timing of a sample/hold (S/H) pulse.

In Fig. 2(a), there is shown an output signal CCDout of a horizontal register whose final electrode is not separated from this horizontal register. Since the final electrode is not separated, a falling time of a clock pulse becomes long, and as represented in Fig. 2(a), a falling time period "tR" during the signal output period of this output signal CCDout is prolonged. As a consequence, a hold time period "tH" is shortened (narrowed).

In Fig. 2(b), on the other hand, there is shown an output signal CCDout of a horizontal register whose final electrode is separated from this horizontal register. Since the final electrode is separated, a falling time of a clock pulse becomes short, and as represented in Fig. 2(b), a falling time period "tR" during the signal output period of this output signal CCDout is shortened. As a consequence, a hold tine period "tH" is prolonged (widened). In other words, since the final electrode is separated from the horizontal register, the falling time of the waveform of the horizontal clock pulse applied to the final electrode is shortened, so that the high-speed operation can be maintained and the signal hold time period of the output signal can be made wide.

Referring back to Fig. 1, imaging operations of the charge transfer solid-state imaging device will now be explained.

A signal charge photo-converted by the photodiode 1 is read out to the vertical register 2 located adjacent to the photodiode 1. The signal charge is sequentially transferred by the vertical register 2 to the horizontal register 3. Moreover, the signal charge is sequentially transferred by the horizontal register 3 via the final electrode 5 of the horizontal register 3 to the signal charge detecting unit 4. Then, this signal charge is converted into a signal charge by the signal charge detecting unit 4.

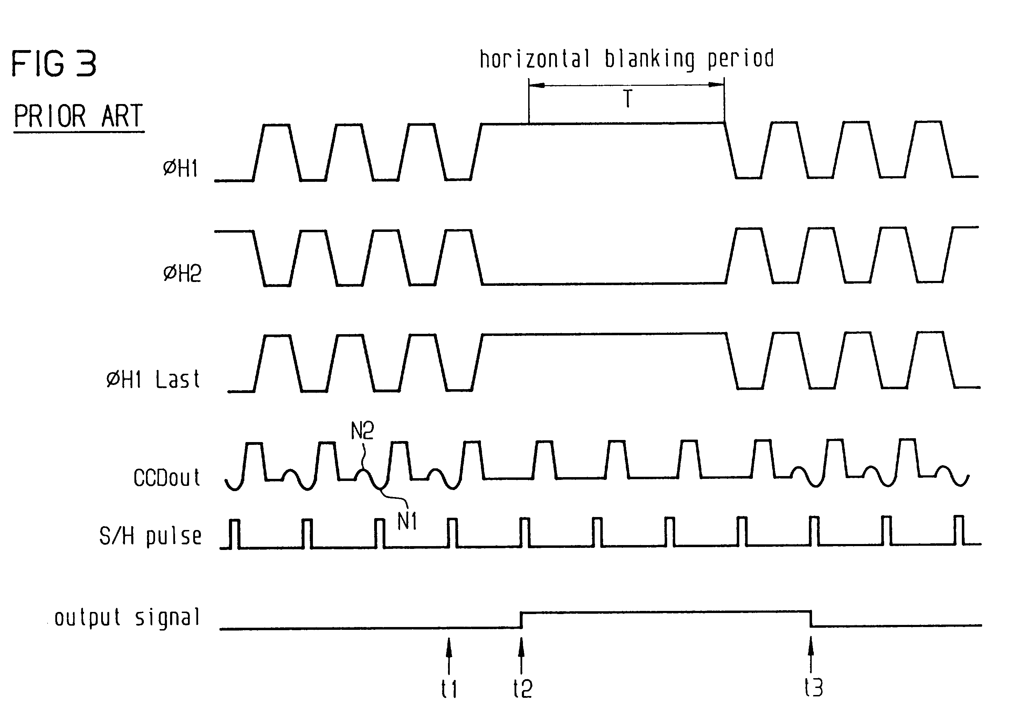

The above-described operation will now be explained with reference to a timing chart of Fig. 3. In the timing chart of Fig. 3, there are represented the horizontal clock pulses φH1 and φH2 applied to the horizontal register 3, the clock pulse φH1Last applied to the final electrode 5, the output signal CCDout, the S/H pulse for sampling/holding (S/H) the output signal CCDout, and the signal processed by the sample/hold operation.

The horizontal clock pulses φH1 and φH2 are applied to the horizontal register 3, so that the signal charges are sequentially transferred along the direction of the signal charge detecting unit 4. The time period during which such a charge transfer operation is carried out corresponds to the transfer period.

As indicated in this timing chart, both the clock pulse φH1 and the clock pulse φH2 correspond to complementary pluses whose phases are reversed with each other. The clock pulse φHlast applied to the final electrode 5 is the same pulse as the clock pulse φH1. The signal charge which is sequentially transferred in response to these clock pulses is converted into the signal voltage in the signal charge detecting unit 4, and this converted signal voltage is sent out as the output signal CCDout. Then, this output signal CCDout is sampled/held by the sample/hold circuit 12 at the rising timing of the sample/hold (S/H) pulse.

In the horizontal blanking period T, the clock pulses φH1 and φH2 are fixed to the constant values. Within this horizontal blanking period, the signal charges stored in the vertical register 2 is transferred to the horizontal register 3. At this time, the clock pulse φH1Last also becomes a constant value together with the clock pulse φH1.

At a time instant "t1" shown in Fig. 3, the output signal CCDout of the charge transfer solid-state imaging device is superimposed with the noise (i.e., noise caused by impedance mismatching) by coupling the horizontal clock pulses φH1, φH2, and φH1Last with each other. In this case, this level of the output signal CCDout is decreased (denoted as "N2" in Fig. 3) in the rising time of the clock pulse φH2, whereas the level of the output signal CCDout is increased (indicated as "N1" in Fig. 3) in the falling times of the clock pulses φH1 and φH1Last.

At a time instant "t2" of Fig. 3, during the horizontal blanking period T, the oscillation of the horizontal clock pulse φH1 used to receive the signal charge supplied from the vertical register 2 is fixed at a high level, whereas the oscillation of the horizontal clock pulse φH2 used to receive the signal charge supplied from the vertical register 2 is fixed at a low level. Then, also the clock pulse φH1Last of the final electrode 5 of the horizontal register is fixed at a high level. As a consequence, the output signal CCDout during the horizontal blanking period T is not adversely influenced by the noise caused by coupling the horizontal clock pulses φH1, φH2, and φH1Last. Accordingly, the level of the output signal CCDout after being S/H (sample/hold) processes in the horizontal blanking period T becomes lower than that of the output signal CCDout after being S/H-processed within the transfer period.

Furthermore, at a time instant "t3" of Fig. 3, also after the horizontal blanking period T, the noise is similarly superimposed on the output signal CCDout, and the level of the output signal is lowered in the rising time of the clock pulse φH2, whereas the level of this output signal is increased in the falling times of the clock pulses φH1 and φH1Last. In other words, as illustrated in the tine instants t2 and t3 of Fig. 3, a stepped portion is produced in the sample/hold-processed signal output.

The adverse influence caused by this clock pulse coupling will make not so serious problems during the large signal output, namely, when the signal output "A" shown in Fig. 3 is large. However, this adverse influence will make a serious problem during the small signal output, namely, when the signal output "A" is small. In other words, the level of the sample/hold-processed output signal during the horizontal blanking period is lowered, as compared with the level of the sample/hold-processed output signal during the transfer period. As a result, such a shading phenomenon will occur that both ends on the display screen sink (namely, portions before/after horizontal blanking period "T" sink).

### BRIEF SUMMARY OF THE INVENTION

### Object of the Invention

Therefore, an object of the present invention is to provide a charge transfer solid-state imaging device capable of preventing a level of an output signal from being lowered during the horizontal blanking period.

### Summary of the Invention

A charge transfer device, according to the present invention performs a charge transfer operation by a plurality of drive clocks. Among a plurality of drive clocks, a final-stage drive clock to be supplied to a final transfer gate of the horizontal register is supplied to a clock terminal for the final stage, whereas other plural drive clocks are supplied to a plurality of clock terminals. The final-stage drive clock is continuously oscillated in a preselected frequency, during the time period including the horizontal blanking period, whereas the levels of other plural drive clocks are fixed to predetermined values during the horizontal blanking period.

### BRIEF DESCRIPTION OF THE DRAWINGS

This above-mentioned and other objects, features and advantages of this invention will become more apparent by reference to the following detailed description of the invention taken in conjunction with the accompanying drawings, wherein:
Fig. 1 is the circuit diagram of the conventional charge transfer device;
Fig. 2 shows the waveforms of the output signals shown in Fig. 1;
Fig. 3 is the waveform diagram for explaining operations of the conventional charge transfer device indicated in Fig. 1;
Fig. 4 is a circuit diagram for representing a charge transfer device according to a first embodiment of the present invention;
Fig. 5 indicates a waveform chart for explaining operations of the charge transfer device shown in Fig. 4;
Fig. 6 is a circuit diagram for representing a charge transfer device according to a second embodiment of the present invention;
Fig. 7 indicates a waveform chart for explaining operations of the charge transfer device shown in Fig. 6;
Fig. 8 is a circuit diagram for representing a charge transfer device according to a third embodiment of the present invention; and
Fig. 9 indicates a waveform chart for explaining operations of the charge transfer device shown in Fig. 8.

### DETAILED DESCRIPTION OF THE INVENTION

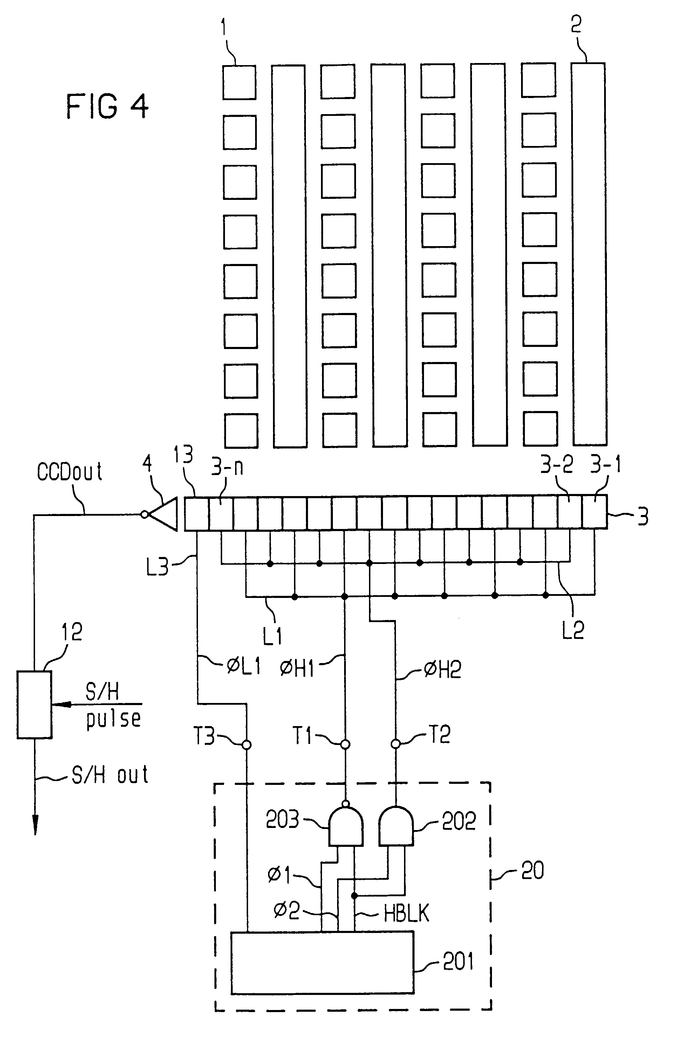

Referring now to Fig. 4, a charge transfer solid-state imaging device according to a first embodiment of the present invention will be described. It should be noted that the same reference numerals shown in Fig. 1 are employed as those for indicating the same or similar circuit elements represented in the following drawings. A horizontal register 3 is constituted as a two-phase drive register to have a plurality of transfer gates 3-1 to 3-n and 13 in one line. Each of the transfer gates includes a storage electrode and a barrier electrode. Horizontal clock pulses "φH1" and "φH2" are alternately applied via lines L1 and L2 to the transfer gates 3-1 to 3-n exept the final gates 13. To the final gate 13 of the horizontal register, another clock pulse "φL1" different from the horizontal clock pulses φH1 and φH2 is applied via a line L3. These clock pulses φH1, φH2, and φL1 are generated from a clock generator 11, respectively, and are applied to terminals T1, T2, and T3.

The clock generator 11 is arranged by a pulse generating circuit 201, an AND gate circuit 202, and a NAND gate circuit 203. A pulse generating circuit generates clock pulses φ1, φ2, φL1, and a horizontal blanking detection signal HBLK. It should be noted that these clock pulses φ1, φ2, and φL1 are the same signals. The horizontal blanking detection signal HBLK is such a signal whose level becomes low only during the horizontal blanking period. The clock pulses φH1 and φH2 may have a complementary relationship between them by the AND gate circuit 202 and the NAND gate circuit 203, and also the levels of these clock pulses φH1 and φH2 become constant during the horizontal blanking period. The clock pulse φL1 is continuously oscillated at a preselected frequency irrelevant to the horizontal blanking period. This clock pulse φL1 is supplied to the final gate 13.

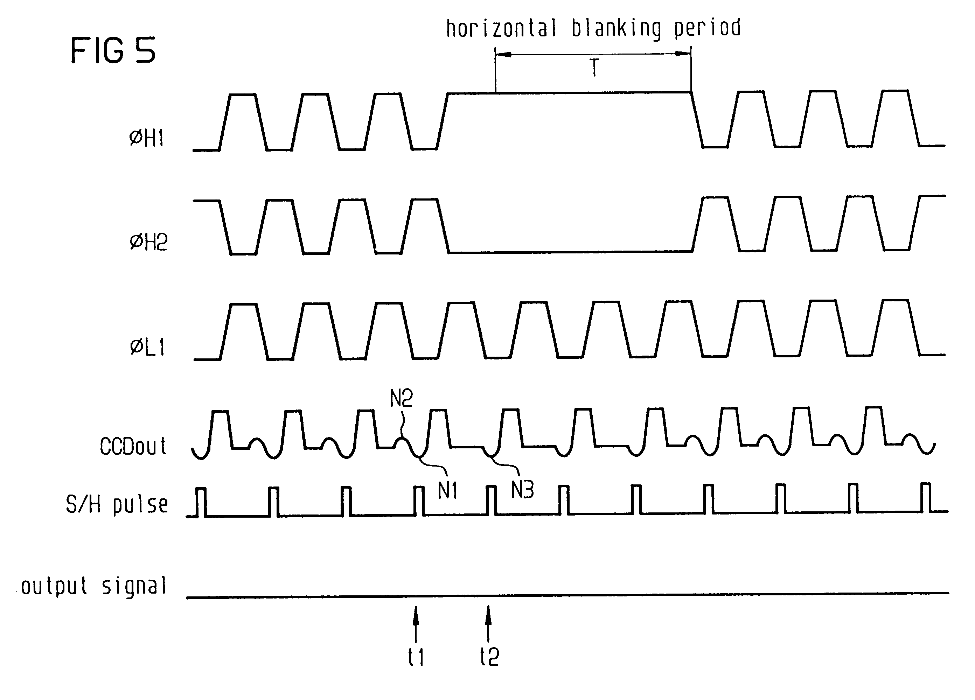

Referring now to Fig. 5, operations of the charge transfer solid-state imaging device according to the first embodiment will be explained.

At a time instant which is not the horizontal blanking period, namely a time instant "t1", the noise is superimposed on the output signal CCDout of the charge transfer solid-state imaging device, because of the couplings of these clock pulses φH1, φH2, and φL1. An output level of the output signal CCDout is lowered (N2) at a rising time of the clock pulse φH2, and the output level of the output signal CCDout is increased (N1) at a falling time of the clock pulse φH1 and φL1.

At a time instant "t2", during the horizontal blanking period T, the supplies of the clock pulses φH1 and φH2 are fixed, and only the clock pulse φL1 is applied to operate the charge transfer solid-state imaging device. At this time, only the noise caused by the coupling of the clock pulse φL1 is superimposed on the output signal CCDout.

At this time, the output level of the output signal CCDout is increased (N3) at a falling time of the clock pulse φH1Last. Therefore, as to the output signal CCDout, the noise modulated by the couplings during the horizontal blanking period T becomes substantially equal to the noise during the transfer period. As a consequence, according to this first embodiment, the signal produced by sampling/holding the output signal CCDout contains a substantially no stepped portion. Thus, it is possible to avoid lowering of the output level of the sample/hold-processed output signal during the horizontal blanking period.

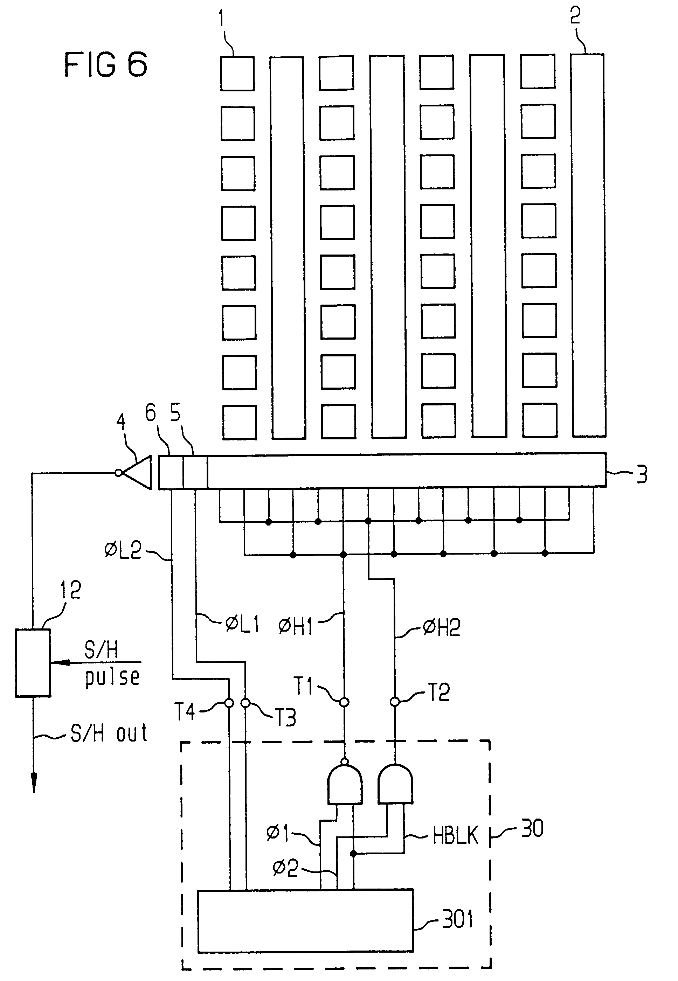

Next, a charge transfer solid-state imaging device according to a second embodiment of the present invention will now be explained. Fig. 6 is a plan view for representing a layout of the charge transfer solid-state imaging device according to the second embodiment. Like reference numerals shown in Fig. 4 indicate the same or similar circuit elements. As indicated in Fig. 6, not only a final electrode to which a clock pulse "φL1" is applied is separated from the horizontal register 3, but also another final electrode to which another clock pulse "φL2" having a complementary relationship with the above-described clock pulse "φL1" (namely, having an opposite phase) is applied is separated from the horizontal register 3. In other words, the clock pulses φL1 and φL2, the repetition frequencies and the phases of which are identical to those of the clock pulses φH1 and φH2, are continuously applied to the final electrodes 5 and 6.

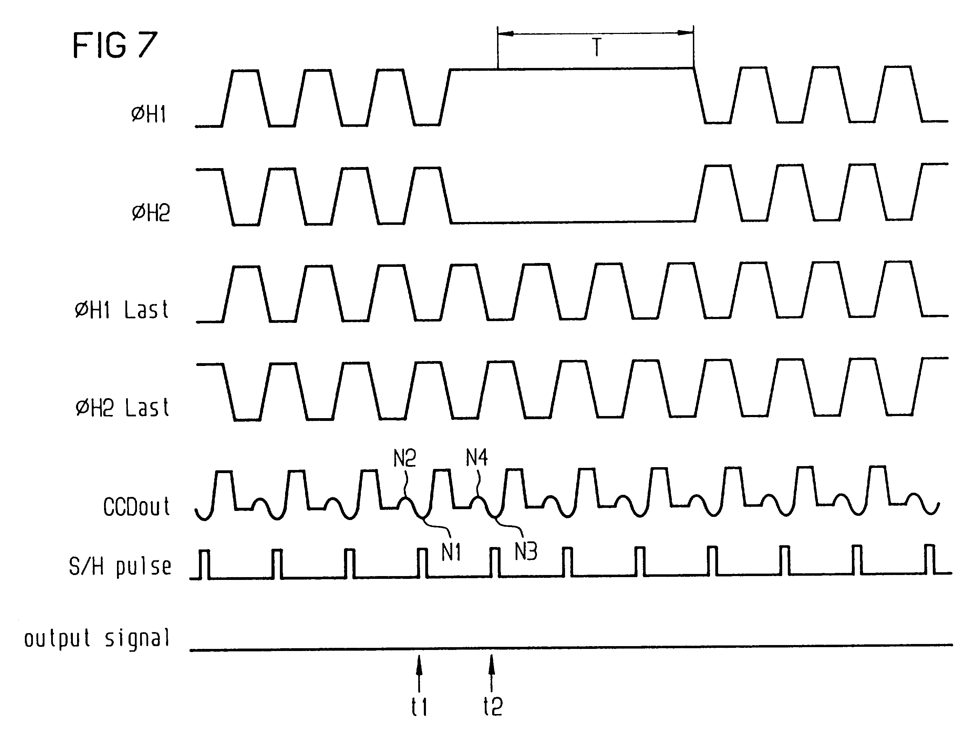

A method for driving the charge transfer solid-state imaging device according to the second embodiment of the present invention will now be explained with reference to Fig. 7.

In this embodiment, the clock pulse φL1 and the clock pulse φL2, whose repetition frequencies and phases are identical to those of the clock pulses φH1 and φH2 are independently applied to the final electrodes 5 and 6, respectively. Then, the supplies of these clock pulses φL1 and φL2 are not stopped, but are continued even during the horizontal blacking period T so as to continuously drive the charge transfer solid-state imaging device.

During the horizontal blanking period T, the oscillating operations of the clock pulse φH1 and φH2 are fixed, and the charge transfer solid-state imaging device is operated in response to the clock pulses φL1 and φL2 applied to the final electrodes 5 and 6. As a consequence, at a time instant "t2"., the noise caused by the couplings of the clock pulses φL1 and φL2 is superimposed on the output signal CCDout. As a result, the output level of the output signal CCDout is lowered (N4) in a rising time of the clock pulse φHL2, and this output level thereof is increased (N3) in a falling time of the clock pulse φHL1.

Therefore, as to the output signal CCDout, the noise modulated by the couplings during the horizontal blanking period T becomes substantially equal to the noise during the transfer period. As a consequence, according to this second embodiment, the signal produced by sampling/holding the output signal CCDout contains a substantially no stepped portion. Thus, it is possible to avoid lowering of the output level of the sample/hold-processed output signal during the horizontal blanking period.

As previously explained, in accordance with this embodiment, even during the horizontal blanking period T, the noise similar to the transfer period can be superimposed on the output signal. There is such an advantage that the stepped portion of the signal obtained by sampling/holding the output signal CCDout can be removed. Then, since the clock pulses are separately applied from the independently provided drive circuits to the final electrodes 5 and 6, the hold period of the signal output can be widened.

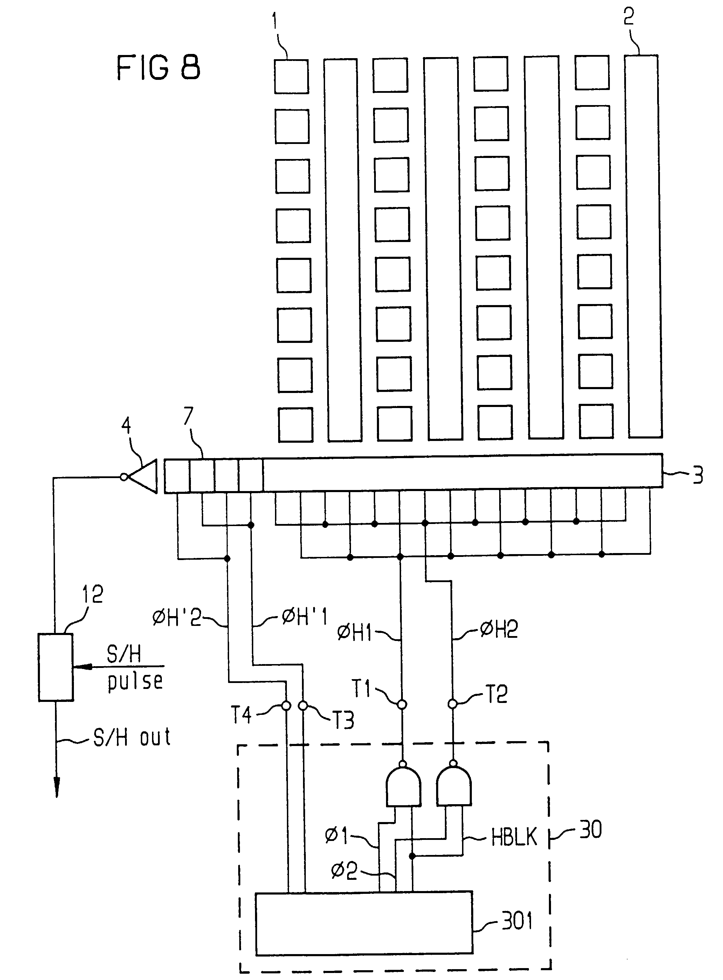

Next, a charge transfer solid-state imaging device according to a third embodiment of the present invention will be described. As represented in Fig. 8, according to the third embodiment, in this charge transfer solid-state imaging device, a portion 13 of the horizontal register for receiving the changes from the vertical register is separated from a dummy horizontal register 7 defined from a portion for receiving the signal charges of the horizontal register to the charge detecting unit.

In other words, a minimum necessary quantity of register elements employed in the horizontal register is equal to the number of register elements capable of receiving the signal charges from the vertical register. This minimum necessary quantity will constitute the horizontal period on the screen. Other than these minimum necessary register elements of the horizontal register 3, the horizontal register connected to an output amplifier circuit 4 corresponds to such a dummy horizontal register 7. This horizontal register 7 is arranged by a plurality of transfer gates. Clock pulses φH1' and φH2' are supplied to these transfer gates.

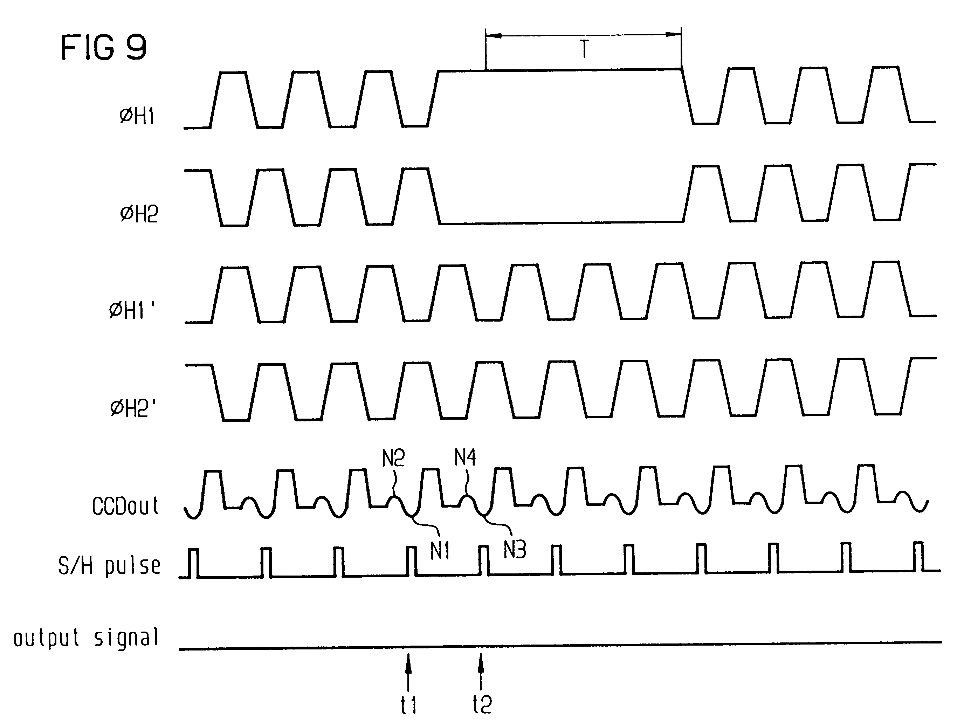

Referring now to Fig. 9, a method for driving this charge transfer solid-state image device according to the third embodiment will be explained.

In Fig. 9, according to the third embodiment, while the electrode to which not only the clock pulse φH1, but also the complementary type clock pulse φH2 having the phase opposite to that of the clock pulse φH1 are applied is separated, the charge transfer solid-state imaging device is driven in the pulse mode. At the same time, while the oscillations of the clock pulses φH1' and φH2' are not fixed even during the horizontal blanking period T, these clock pulses φH1' and φH2' are applied. The output signal CCDout becomes continual wave form as same as horizontal scaning period.

During the horizontal blanking period T, the oscillating operations of the clock pulse φH1 and φH2 are fixed, and the charge transfer solid-state imaging device is operated in response to the clock pulses φH1' and φH2' applied to the dummy electrode 7. As a consequence, at a time instant "t2", the noise caused by the couplings of the clock pulses φH1' and φH2' is superimposed on the output signal CCDout. As a result, the output level of the output signal CCDout is lowered (N4) in a rising time of the clock pulse φH2', and this output level thereof is increased (N3) in a falling time of the clock pulse φH1'.

As previously explained, in any of the charge transfer solid-state imaging device in which the final electrode of the horizontal register is separated from the horizontal register, since the clock pulse is applied to the final electrode of the horizontal register even during the horizontal blanking period, the noise occurred during the horizontal video-output period is made equal to the noise occurred during the horizontal blanking period. As a consequence, if this output signal is sampled/held, then there is no stepped portion in the sample/hold-processed signal, and such a shading phenomenon where both edge portions of the screen sink can be avoided.

Also, according to another charge transfer solid-state imaging device, the two electrodes of the final stage of the horizontal register are separated from the horizontal register, and the complementary type clock pulses are applied to these two electrodes. As a result, the noise occurred during the horizontal video-output period is made equal to the noise occurred during the horizontal blanking period. As a consequence, if this output signal is sampled/held, then there is no stepped portion in the sample/hold-processed signal, and such a shading phenomenon where both edge portions of the screen sink can be avoided.

Although the invention has been described with reference to specific embodiments, this description is not met to be construed in a limiting sense. Various modifications of the disclosed embodiments will become apparent to persons skilled in the art upon reference to the description of the inventibn. It is therefore contemplated that the appended claims will cover any modifications or embodiments as fall within the true scope of the invention.

## Claims

1. A charge transfer device comprising:
a first, a second and a third line,
a ccd register having a plurality of transfer gates, a final one of said transfer gates being connected to said third line and remaining ones of said transfer gates being alternately connected to said first line and said second line, and
a first, a second and a third terminals connected respectively to said first, second and third lines, said first terminals receving a first pulse signal during a period time except at least a horizontal blanking period, said second terminal receiving a second pulse signal during a period of time except at least said horizontal blanking period, and said third terminal receiving a third pulse signal during a period of time including said horizontal blacking period.

2. A charge transfer device as claimed in claim 1, wherein said CCD register constitutes a horizontal register to transfer charges supplied from a plurality of vertical registers.

3. A charge transfer device as claimed in claim 1, further comprising a pulse generating circuit coupled to said first to third terminals, said pulse generating circuit includes a gate circuit responding tp a control signal indicative of said horizontal blanking period and maintaining said first and second lines at a preselected level.

4. A charge transfer device comprising:
a first line, a second line, a third line and fourth line, a plurality of transfer gates arranged along one direction, a transfer gate of a final stage of said plural transfer gates being connected to said third line, a transfer gate of a stage preceding said final stage of said plural transfer gates is connected to said fourth line, and other plural transfer gates being alternately connected to said first line and said second line,
wherein, said first line is connected to a first terminal to which a first pulse signal whose value becomes constant during a horizontal blanking period, said second line is connected to a second terminal to which a second pulse signal having a complementary relationship with said first pulse signal is supplied, said third line is connected to the a terminal to which a third pulse signal having the same waveform as that of said second pulse signal and being oscillated even during said horizontal blanking period, and said fourth line is connected to a fourth terminal to which a fourth pulse signal having the same waveform as that of said first pulse signal and being oscillated even during said horizontal blanking period.

5. A charge transfer device as claimed in claim 4, wherein said plurality of transfer gates constitute a horizontal register for transferring along a horizontal direction, charges supplied from a plurality of vertical registers.

6. A charge transfer device as claimed in claim 4, further comprising:
a pulse generating circuit having a first output terminal connected to said first terminal, a second output terminal connected to said second terminal, a third output terminal connected to said third terminal, and a fourth output terminal connected to said fourth terminal, and for generating said first, second, third, and fourth pulse signals.

7. A charge transfer device comprising:
a plurality of transfer gates arranged along one direction, a plurality of transfer gates involving a final stage of said plural transfer gates constituting a first transfer gate group, other plural transfer gates forming a second transfer gate group, said first transfer group being connected to a third line,and a fourth line, and said second transfer gate group being connected to a first line and a second line,
wherein said first line is connected to a first terminal to which a first pulse signal whose value becomes constant during a horizontal blanking period, said second line is connected to a second terminal to which a second pulse signal having a complementary relationship with said first pulse signal, said third line is connected to a third terminal to which a third pulse signal having the same waveform as that of said second pulse signal and being oscillated even during said horizontal blanking period, and said fourth line is connected to a fourth terminal to which a fourth pulse signal having the same waveform as that of said first pulse signal and being oscillated even during said horizontal blanking period.

8. A charge transfer device as claimed in claim 7, further comprising:
a pulse generating circuit having a first output terminal connected to said first terminal, a second output terminal connected to said second terminal, a third output terminal connected to said third terminal, and a fourth output terminal connected to said fourth terminal, and for generating said first, second, third, and fourth pulse signals.

9. A charge transfer device for transferring charges in response to a plurality of drive clocks, comprising:
a clock terminal for a final stage of a transfer gates, to which a final-stage drive clock applied to a final transfer gate among said plurality of drive clocks is applied, and
a plurality of clock terminals to which other plural drive clocks are applied,
wherein said final-stage drive clock is oscillated at a predetermined frequency during a time period involving a horizontal blanking period, and said other plural drive clocks are fixed to predetermined values during said horizontal blanking period.
